# EUROPEAN PATENT SPECIFICATION

(11) **EP 1 366 301 B1**
(45) Date of publication and mention of the grant of the patent: **24.11.2004**
(21) Application number: 02702547.7
(22) Date of filing: 07.03.2002
(51) Int. Cl.: F15B 15/28, G01D 11/30

(54) **SENSOR CARRIER**
SENSORTRÄGER
COMMANDE DE PISTON

(30) Priority: 09.03.2001 GB 0105898
(43) Date of publication of application: 03.12.2003
(73) Proprietor: CNE (UK) Ltd., Nuneaton, Warwickshire CV11 6BQ (GB)
(72) Inventor: LONATI, Giancarlo, Paulo, I-20161 Milano (IT)
(74) Representative: Dearing-Lambert, Peter Richard
(86) International application number: PCT/GB2002/000995
(87) International publication number: WO 2002/073042

(56) References cited:
- EP-A- 0 972 954
- DE-A- 19 653 222
- US-A- 5 438 911

## Description

This invention relates to a sensor carrier according to the preamble of claim 1.

Document DE 196 53 222 shows such a sensor carrier.

The invention relates also to a method of mounting such a sensor carrier.

In the use of pneumatic piston-and-cylinder assemblies in industry it is common practice to locate on the exterior of the cylinder a sensor such as a reed switch which detects the proximity of the piston by magnetism and closes a circuit when the piston reaches or passes the position of the sensor. There are various ways of mounting a sensor on a cylinder, but most of them have the effect of forming a projection from the cylinder which can easily be damaged. Therefore a preferred method of mounting a sensor is to locate it in an undercut, longitudinal groove in the cylinder periphery. An advantage of this arrangement is that the position of the sensor can be adjusted by moving it along the groove.

In these arrangements a sensor is installed or removed by moving it to and out of one end of its groove. However the end caps fitted to a cylinder barrel do not necessarily have grooves corresponding with those of the barrel and commonly there will be in use other equipment at each end of the cylinder which will obstruct removal or insertion of a sensor. Thus replacement of a sensor, e.g. in the event of failure, is a laborious and time consuming exercise requiring a cylinder to be dismantled from adjacent equipment or even the removal of one of its end caps. Installing a sensor for the first time on pre-existing apparatus will be a similarly difficult and laborious operation.

A principal object of the present invention is to overcome this problem and to provide an arrangement whereby a sensor can be installed in or removed from an undercut groove in a cylinder periphery without the necessity to gain access to either end of the groove.

In accordance with one aspect of the present invention there is provided a sensor carrier for mounting in an undercut groove extending longitudinally of the periphery of the cylinder of a piston-and-cylinder assembly, the carrier comprising an elongated body having a width such that it may pass between the opposed flanges of the groove and location means in the region of one end of the body which extend beyond the body in the plane of its width but not in the plane of its depth, such that said location means may be inserted into the groove while the body is generally perpendicular to the groove and said width plane contains or is parallel with the axis of the groove, and thereafter the body may be rotated through approximately 90° and lowered into the groove, whereupon said flanges will prevent emergence from the groove of the location means.

Said location means may comprise a pair of fixed lugs oppositely projecting from one end of the body.

Preferably the location means additionally comprises a spring-loaded lug projecting from the opposite end of the body to lie in the same plane as said fixed lugs. Preferably the spring-loaded lug has a cam surface whereby it will latch beneath one of said flanges as the body enters the groove, and means is preferably provided to enable the spring-loaded lug to be withdrawn against the action of the spring to enable said opposite end of the body to re-emerge from the groove.

Preferably the body has a threaded bore for a grub screw, said bore being orthogonal to said width plane of the body.

The body may be or may comprise a strip of plastics material of rectangular cross section in which a reed switch is embedded.

In accordance with another aspect of the present invention there is provided the assembly of the sensor carrier of the present invention and a cylinder having a longitudinal undercut groove in its periphery.

In accordance with yet another aspect of the present invention there is provided a method of mounting the sensor carrier of the present invention in a longitudinal undercut groove in the periphery of the cylinder of a piston-and-cylinder assembly, the method comprising presenting the body generally perpendicularly to the groove so that an end of the body provided with said location means enters the groove and rotating the body approximately through 90° and lowering it into the groove.

A preferred embodiment of the present invention will now be described by way of non-limitative example with reference to the accompanying drawings, in which:
- Figure 1: is a perspective view of a sensor carrier in accordance with the invention;
- Figures 2 and 3: are respectively a side an an end view of a cylinder formed with longitudinal undercut grooves, and
- Figures 4A-4H: illustrate how the sensor carrier of Figure 1 can be inserted in and removed from one of the grooves of the cylinder of Figures 2 and 3.

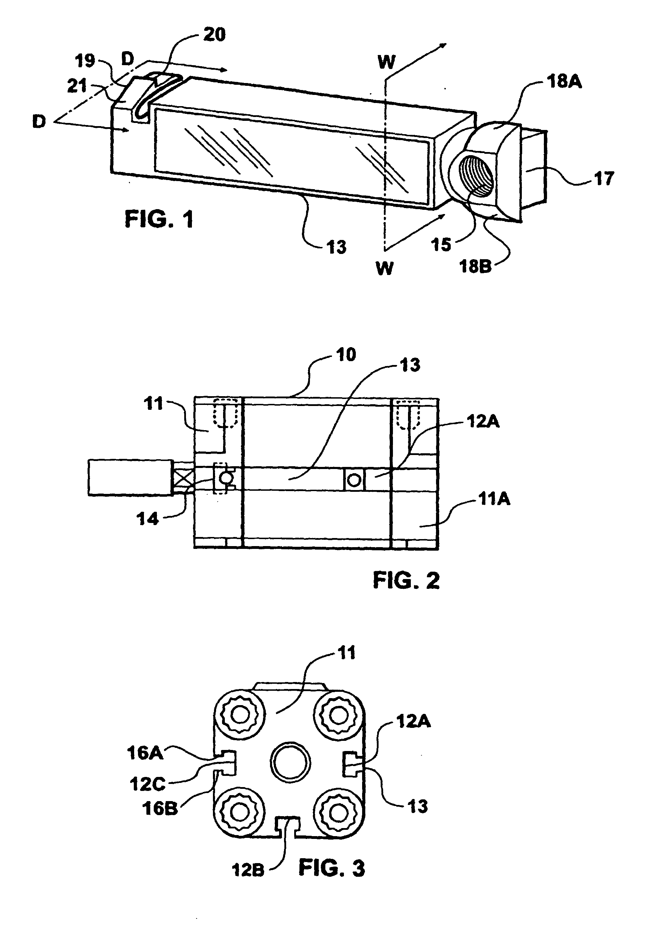

Figures 2 and 3 illustrate the barrel 10 of the cylinder of a pneumatic piston-and-cylinder assembly having end caps 11 and 11A. On three sides of the generally rectangular cylinder periphery are formed similar, undercut longitudinal grooves 12A, 12B and 12C generally of T-section. An elongated sensor carrier 13 is to be inserted in a selected one 12A of the grooves, the carrier 13 comprising an elongated body of plastics material generally of rectangular section, in which a reed switch or a comparable electronic arrangement is embedded. Throughout this specification wherever a "reed switch" is referred to it is to be understood that an electronic switch may be substituted. The position of the sensor carrier 13 is adjustable by sliding it along the length of the groove 12A and it is releasably held at the desired position by a grub screw (not shown) which engages in a threaded hole 15 of the sensor body, so that it can be turned against or away from the bottom of the groove 12A. The reed switch or the like embedded in the body will respond by magnetic interaction to the proximity of the piston as this moves along the bore of the cylinder 10 to close a circuit which may be used to control the stroke of the piston or for some other purpose.

The cylinder barrel 10 shown in Figures 2 and 3 has end caps 11 and 11A formed with undercut grooves aligned with those of the cylinder body, so that the sensor carrier 13 can be positioned as shown in Figure 2 so that it straddles the cylinder barrel 10 and one of the end caps 11. However it is to be understood that end caps are not always grooved, or that their grooves may not be aligned with those of the cylinder barrel. In either case a known sensor carrier could only be inserted into or removed from one end of a groove of the cylinder barrel by first removing one of the end caps 11 and 11A.

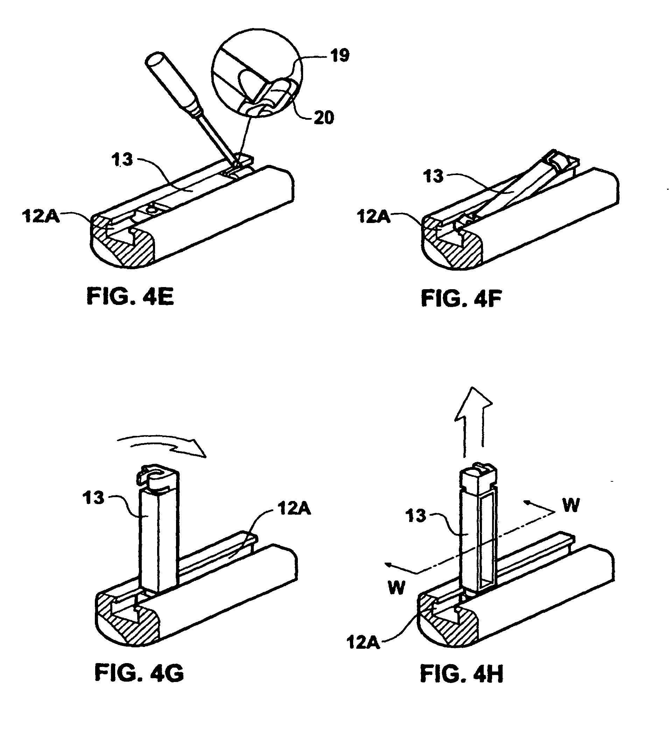

In accordance with the present invention, however, the sensor carrier 13 shown in Figure 1 has a width in the plane W-W which is less than the gap between the opposed flanges 16A and 16B of each undercut groove 12A-12C. At one end, however, the body 13 has a head 17 in which the grub screw hole 15 is formed orthogonally to the width plane W-W and from opposite sides of this head fixed lugs 18A and 18B project beyond the width of the body. At its opposite end the body of the carrier 13 is provided with a spring-loaded lug 19 which under the influence of the spring (not shown) also normally projects beyond the width of the body but is provided with a catch 20 (Figure 4E) whereby it may be withdrawn to lie within the width of the body. The underside 21 of the spring-loaded lug 19 is formed as a cam which will interact with one of the flanges 16A or 16B of an undercut groove so that said opposite end of the carrier body 13 can be latched into a groove 12A-12C.

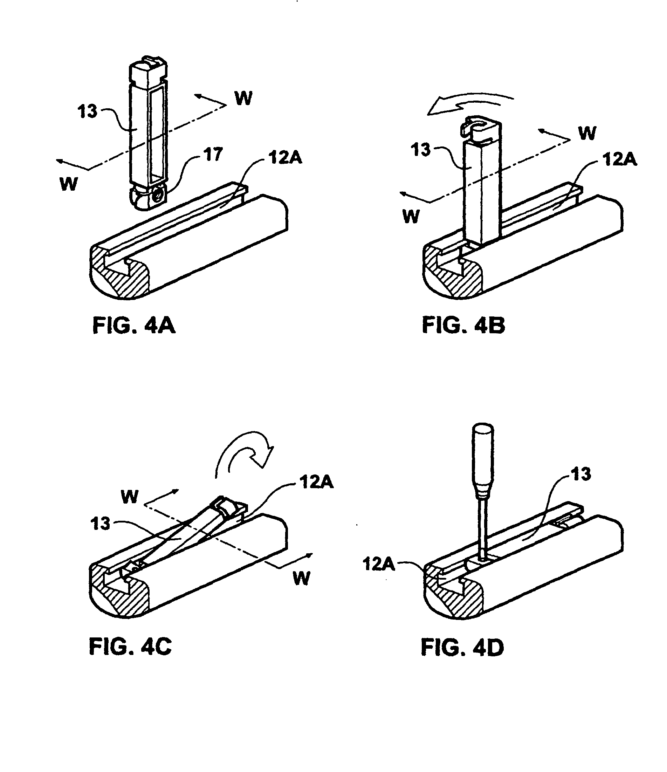

In the plane D-D of its depth none of the lugs 18A, 18B or 19 projects beyond the sensor carrier body 13. Consequently with the plane W-W generally containing the axis of the groove 12A the carrier 13 may be presented to the groove (Figure 4A) and its head 17 inserted into the groove (Figure 4B). The sensor carrier 13 is now rotated through 90° so that the fixed lugs 18A, 18B engage under the flanges 16A, 16B of the groove and the carrier body is lowered (Figure 4C) until the spring-loaded lug 19 latches under one of the flanges 16A,16B of the groove. Having slid the sensor carrier 13 to the desired position along the groove it is locked in place by inserting a grub screw in the hole 15 (Figure 4D).

To remove the sensor carrier from the groove first the grub screw is loosened or removed and then the catch 20 (Figure 4E) is pulled back, preferably using a suitable tool such as a screw driver. The end of the sensor carrier 13 having the spring-loaded lug 19 can now be lifted out of the groove (Figure 13F) until the sensor carrier is again normal to the groove (Figure 4G), whereupon it is counter-rotated through 90° enabling the fixed lugs 18A, 18B to pass out of the gap between the flanges 16A, 16B of the groove.

## Claims

1. A sensor carrier (13) for mounting in an undercut groove (12A,12B,12C) extending longitudinally of the periphery of the cylinder (10) of a piston-and-cylinder assembly, the carrier (13) comprising an elongated body having a width such that it may pass between the opposed flanges (16A,16B) of the groove, **characterised in that** the carrier further comprises location means (17) in the region of one end of the body which extend beyond the body in the plane of its width (W-W) but not in the plane of its depth (D-D) such that said location means (17) may be inserted into the groove while the body is generally perpendicular to the groove and said width plane contains or is parallel with the axis of the groove, and thereafter the body may be rotated through approximately 90° and lowered into the groove, whereupon said flanges (16A,16B) will prevent emergence from the groove of the location means (17).

2. A sensor carrier (13) as claimed in claim 1, wherein said location means comprises a pair of fixed lugs (18A,18B) oppositely projecting from one end of the body.

3. A sensor carrier (13) as claimed in claim 2, wherein the location means additionally comprises a spring-loaded lug (19) projecting from the opposite end of the body to lie in the same plane as said fixed lugs (18A,18B).

4. A sensor carrier (13) as claimed in claim 3, wherein the spring-loaded lug (19) has a cam surface whereby it will latch beneath one of said flanges (16A,16B) as the body enters the groove, means being provided to enable the spring-loaded lug (19) to be withdrawn against the action of the spring to enable said opposite end of the body to re-emerge from the groove.

5. A sensor carrier (13) as claimed in any one of the preceding claims, wherein the body has a threaded bore (15) for a grub screw, said bore (15) being orthogonal to said width plane (W-W) of the body.

6. A sensor carrier (13) as claimed in any one of the preceding claims, wherein the body is or comprises a strip of plastics material of rectangular cross section in which a switch is embedded.

7. A cylinder having a longitudinal undercut groove (12A,12B,12C) in its periphery with the sensor carrier (13) claimed in any one of the preceding claims mounted in said longitudinal undercut groove.

8. A method of mounting the sensor carrier (13) claimed in any one of claims 1-7 in a longitudinal undercut groove (12A,12B,12C) in the periphery of the cylinder (10) of a piston-and-cylinder assembly, the method comprising presenting the body generally perpendicularly to the groove so that an end of the body provided with said location means enters the groove and rotating the body approximately through 90° and lowering it into the groove.

## Patentansprüche

1. Sensorträger (13) zur Montage in einer unterschnittenen Nut (12A, 12B, 12C), die sich in Längsrichtung der Peripherie des Zylinders (10) einer Kolben- und Zylinderbaugruppe erstreckt, wobei der Träger (13) aus einem länglichen Körper besteht, der so einer Breite ist, dass er zwischen den gegenüberliegenden Flanschen (16A, 16B) der Nut durchlaufen kann, **dadurch gekennzeichnet, dass** der Träger weiter ein Befestigungsmittel (17) im Bereich des einen Endes des Körpers umfasst, das sich über den Körper hinaus in der Ebene seiner Breite (W-W), aber nicht in der Ebene seiner Tiefe D-D erstreckt, so dass besagtes Befestigungsmittel (17) in die Nut eingeführt werden kann, während der Körper allgemein senkrecht zur Nut ist und besagte Breitenebene die Achse enthält bzw. parallel mit der Achse der Nut ist, und danach der Körper durch ca. 90° gedreht und in die Nut abgesenkt werden kann, wonach besagte Flanschen (16A, 16B) Austreten aus der Nut des Befestigungsmittel (17) verhindern werden.

2. Sensorträger (13) wie in Anspruch 1 beansprucht, worin besagtes Befestigungsmittel aus einem Paar fester Nasen (18A, 18B) besteht, die entgegengesetzt aus einem Ende des Körpers hervorragen.

3. Sensorträger (13) wie in Anspruch 2 beansprucht, worin das Befestigungsmittel außerdem eine federbelastete Nase (19) umfasst, die aus dem entgegengesetzten Ende des Körpers hervorragt, um in derselben Ebene wie besagte festen Nasen (18A, 18B) zu liegen.

4. Sensorträger (13) wie in Anspruch 3 beansprucht, worin die federbelastete Nase (19) eine Nockenfläche aufweist, wodurch sie unterhalb eines der besagten Flansche (16A, 16B) einrasten wird, sowie der Körper in die Nut eintritt, wobei Mittel vorgesehen sind, um das Zurückziehen der federbelasteten Nase (19) gegen die Aktion der Feder zu ermöglichen, damit das besagte entgegengesetzte Ende des Körper wieder aus der Nut auftauchen kann.

5. Sensorträger (13) wie in einem beliebigen der vorhergehenden Ansprüche beansprucht, worin der Körper eine Gewindebohrung (15) für eine Madenschraube aufweist, wobei besagte Bohrung (15) orthogonal zu besagter Breitenebene (W-W) des Körpers ist.

6. Sensorträger (13) wie in einem beliebigen vorhergehenden Anspruch beansprucht, worin der Körper ein Streifen aus Plastikmaterial rechteckigen Querschnitts ist bzw. aus einem solchen besteht, in den ein Schalter eingebettet ist.

7. Zylinder mit einer longitudinalen, unterschnittenen Nut (12A, 12B, 12C) in seiner Peripherie, wobei der in einem beliebigen der vorhergehenden Ansprüche beanspruchte Sensorträger (13) in besagter longitudinalen, unterschnittenen Nut montiert ist.

8. Verfahren zum Montieren des in einem beliebigen der Ansprüche 1-7 beanspruchten Sensorträgers (13) in eine longitudinale, unterschnittene Nut (12A, 12B, 12C) in der Peripherie des Zylinders (10) einer Kolben- und Zylinderbaugruppe, wobei das Verfahren das Präsentieren des Körpers im Allgemeinen senkrecht zur Nut, so dass ein Ende des mit besagten Befestigungsmitteln versehenen Körpers in die Nut eintritt, und das Drehen des Körpers durch ca. 90° und sein Absenken in die Nut umfasst.

## Revendications

1. Commande de piston (13) destinée à être montée dans une rainure évidée (12A, 12B, 12C) se prolongeant de manière longitudinale par rapport à la périphérie du cylindre (10) d'un ensemble du type piston et cylindre, la commande de piston (13) comportant un corps allongé ayant une largeur telle qu'il peut passer entre les rebords opposés (16A, 16B) de la rainure, **caractérisée en ce que** la commande de piston comporte par ailleurs un moyen de positionnement (17) dans la région d'une extrémité du corps qui se prolonge au-delà du corps dans le plan de sa largeur (W-W) mais non pas dans le plan de sa profondeur (D-D) de telle manière que ledit moyen de positionnement (17) peut être inséré dans la rainure alors que le corps est en général perpendiculaire à la rainure et ledit plan de largeur contient ou est parallèle à l'axe de la rainure, et par la suite, le corps peut être mis en rotation sur 90° environ et être abaissé dans la rainure, après quoi lesdits rebords (16A, 16B) empêchent la sortie du moyen de positionnement (17) de la rainure.

2. Commande de piston (13) selon la revendication 1, dans laquelle ledit moyen de positionnement comporte une paire de pattes fixes (18A, 18B) qui se projettent de manière opposée en provenance d'une extrémité du corps.

3. Commande de piston (13) selon la revendication 2, dans laquelle ledit moyen de positionnement comporte en plus une patte à ressort (19) qui se projette en provenance de l'extrémité opposée du corps et se repose dans le même plan que lesdites pattes fixes (18A, 18B).

4. Commande de piston (13) selon la revendication 3, dans laquelle ladite patte à ressort (19) dispose d'une surface de came, ce par quoi elle s'enclenche sous l'un desdits rebords (16A, 16B) quand le corps entre dans la rainure, un moyen étant prévu pour permettre à la patte à ressort (19) d'être retirée sous l'effet de l'action du ressort pour permettre à ladite extrémité opposée du corps de ressortir de la rainure.

5. Commande de piston (13) selon l'une quelconque des revendications précédentes, dans lequel le corps est doté d'un trou fileté (15) pour une vis à pression sans tête, ledit trou (15) étant orthogonal par rapport au plan de largeur (W-W) du corps.

6. Commande de piston (13) selon l'une quelconque des revendications précédentes, dans lequel le corps est ou comporte une bande en plastique d'une section rectangulaire dans laquelle un interrupteur est intégré.

7. Cylindre ayant une rainure évidée longitudinale (12A, 12B, 12C) dans sa périphérie avec la commande de piston (13) selon l'une quelconque des revendications précédentes montée dans ladite rainure évidée longitudinale.

8. Procédé destiné à monter la commande de piston (13) selon l'une quelconque des revendications 1 à 7, dans une rainure évidée longitudinale (12A, 12B, 12C) dans la périphérie du cylindre (10) d'un ensemble piston et cylindre, le procédé comportant la présentation du corps en général de manière perpendiculaire à la rainure de telle manière qu'une extrémité du corps dotée dudit moyen de positionnement entre dans la rainure et la mise en rotation du corps sur 90° environ et son abaissement dans la rainure.
